# FASCICULE DE BREVET EUROPEEN

(11) **EP 3 861 587 B1**
(45) Date de publication et mention de la délivrance du brevet: **24.05.2023**
(21) Numéro de dépôt: 19801944.0
(22) Date de dépôt: 02.10.2019
(51) Int. Cl.: H01M 10/6555, H01M 10/625, H01M 10/647, H01M 10/613

(54) **SYSTÈME DE REFROIDISSEMENT DE CELLULES DE BATTERIE DE VÉHICULE AUTOMOBILE**
SYSTEM ZUR KÜHLUNG VON BATTERIEZELLEN FÜR KRAFTFAHRZEUGE
SYSTEM FOR COOLING MOTOR VEHICLE BATTERY CELLS

(30) Priorité: 02.10.2018 FR 1859094
(43) Date de publication de la demande: 11.08.2021
(73) Titulaire: Valeo Systemes Thermiques-THS, 78322 Le Mesnil Saint Denis Cedex (FR)
(72) Inventeur: PERRIN, Thibaut, 72210 LA SUZE SUR SARTHE (FR); JOVET, Bastien, 78322 LE MESNIL SAINT DENIS CEDEX (FR); VERON, Julien, 72210 LA SUZE SUR SARTHE (FR); BUSSON, François, 72210 LA SUZE SUR SARTHE (FR)
(74) Mandataire: Valeo Systèmes Thermiques
(86) Numéro de dépôt international: PCT/FR2019/052336
(87) Numéro de publication internationale: WO 2020/070447

(56) Documents cités:
- EP-A1- 2 851 991
- DE-A1- 19 545 448
- DE-A1-102014 219 812
- US-A- 2 950 093
- US-A1- 2016 344 061

## Description

La présente invention concerne un système de refroidissement d'au moins un composant électrique susceptible de dégager de la chaleur lors de son fonctionnement, notamment pour un module de stockage d'énergie électrique ou un dispositif d'électronique de puissance, le dispositif étant notamment agencé pour être monté sur un véhicule automobile.

L'invention est notamment applicable pour toutes les automobiles électriques ou hybrides avec un pack de batteries ou cellules de batterie.

Les demandes de brevet US2017176108 et WO 2013056938 décrivent des échangeurs de chaleur pour refroidir des cellules de batterie.

Lors d'une phase de charge rapide du dispositif de stockage électrique ou cellules de batterie, qui consiste à charger le dispositif de stockage électrique sous une tension et un ampérage élevés, de manière à charger le dispositif de stockage électrique en un temps maximum de quelques dizaines de minutes. Cette charge rapide implique un échauffement du dispositif de stockage électrique qu'il convient de traiter.

En effet, la température du dispositif de stockage d'énergie électrique doit rester comprise entre 20°C et 40°C afin d'assurer la fiabilité, l'autonomie, et la performance du véhicule, tout en optimisant la durée de vie de ce dispositif de stockage d'énergie électrique. De plus, une variation entre deux points d'une même cellule de batterie supérieure à 5°C peut entrainer des dommages irréparables.

Lors de la charge rapide, la puissance dégagée par la batterie est très importante, il s'agit du point dimensionnant pour le système. Pour extraire cette puissance thermique, le plus souvent comprise entre 10 et 20kW.

Par conséquent, il devient primordial d'augmenter les surfaces d'échanges entre un fluide caloporteur et les cellules électriques tout en limitant l'encombrement.

Habituellement on retrouve une plaque froide, traversée par un fluide caloporteur, située sous le module.

L'invention a ainsi pour objet un dispositif de régulation thermique, notamment de refroidissement, pour composant électrique susceptible de dégager de la chaleur lors de son fonctionnement, notamment pour un module de stockage d'énergie électrique ou un dispositif d'électronique de puissance, le dispositif étant notamment agencé pour être monté sur un véhicule automobile, ce dispositif comportant :
- une première paroi suivant un premier plan et comprenant un premier canal, une première extrémité dudit canal débouchant sur une tranche d'une extrémité de la première paroi,
- une deuxième paroi suivant un deuxième plan et comprenant un deuxième canal, une première extrémité dudit canal débouchant sur une tranche d'une première extrémité de la deuxième paroi,
- au moins un premier élément distributeur fluidique agencé pour être mis en communication fluidique avec au moins l'un des canaux,
les premier et deuxième canaux étant agencé pour être traversé par un fluide caloporteur, les premier et deuxième plans étant sécants et l'élément distributeur étant distinct des première et deuxième parois et étant monté sur au moins la tranche de la première extrémité des première et deuxième parois.

On entend par « paroi » une paroi d'échange thermique formant avantageusement un échangeur de chaleur favorisant le traitement thermique du composant électrique. Pour cela, un fluide caloporteur parcourt les canaux. Le fluide est alors en échange thermique avec la plaque d'échange thermique. On comprendra alors que la plaque d'échange thermique, par conduction, permet un transfert thermique entre le fluide et le composant électrique. Dans certaines conditions, le dispositif peut être amené à chauffer les composants électriques. Avantageusement, les première et deuxième parois sont mécaniquement liées entre elles. Les première et deuxième parois ont chacune une épaisseur délimitée par deux faces externes. Les canaux des première et deuxième parois sont formés dans l'épaisseur desdites parois.

Le fluide caloporteur utilisé est préférentiellement de l'eau glycolée, sans limitation du titre de glycol (0% à 100%). Alternativement le fluide caloporteur peut être de l'eau, ou choisi parmi les fluides d'appellation R134a, R1234yf ou R744.

Les modules de stockages d'énergie électrique sont par exemple des cellules de batterie pouvant comprendre une pluralité de batteries au lithiumion (Li-ion) pour une utilisation dans un véhicule hybride. Dans un autre mode de réalisation, la pluralité de cellules de batterie sont des batteries Li-ion pour une utilisation dans un véhicule électrique à batterie.

La présente invention propose ainsi notamment de refroidir, en plus de la partie inférieure du module, l'une au moins des deux faces latérales du module.

Selon l'invention, le premier élément de distribution est distinct des première et deuxième parois. Autrement dit, l'élément de distribution est une pièce rapportée et qui peut être fabriquée séparément puis rapportée sur la tranche des première et deuxième parois. Dans un tel cas, l'élément de distribution est ensuite fixé par brasage, collage, sertissage ou soudage aux parois en fonction de la matière dans laquelle la pièce et les parois sont réalisées.

Les différents aspects de l'invention qui seront décrits peuvent être pris ensembles ou séparément.

Selon un aspect de l'invention, le dispositif de régulation thermique comprend un deuxième élément distributeur, distinct des première et deuxième parois, monté sur une tranche d'une extrémité opposée à la première extrémité des première et deuxième parois, également appelé deuxième extrémité.

Dans ce mode de réalisation, les canaux traversant les première et deuxième parois sont débouchant de part et d'autre desdites parois, sur une première et une deuxième extrémité formant les extrémités longitudinales desdites parois. Ainsi, une première extrémité des canaux est en connexion fluidique avec le premier élément de distribution, et une seconde extrémité des canaux est en connexion fluidique avec le deuxième élément distributeur.

Selon un aspect de l'invention, les première et deuxième parois sont liées mécaniquement entre elles par au moins une extrémité transversale de l'une des parois. Avantageusement, la première paroi est liée, par l'une de ses extrémités transversales, à l'une des faces externes de la deuxième paroi. Avantageusement encore, la première paroi forme une cloison latérale du dispositif, la deuxième paroi formant une plaque de fond séparée par la première paroi. La plaque de fond peut être alors séparée en deux portions de plaque de fond, avantageusement ces deux portions sont identiques. Ainsi selon se mode de réalisation, un dispositif de régulation thermique peut réguler au moins deux composants électrique, positionné de part et d'autre de la première paroi, qui seront alors chacun refroidi par au moins deux faces.

Selon un aspect de l'invention, les première et deuxième parois sont de forme sensiblement rectangulaire, la première paroi et la deuxième paroi sont orthogonales entre elles.

Ce mode de réalisation permet une réalisation du circuit de canaux simplifiée au sein des parois.

Selon un aspect de l'invention, au moins le premier élément distributeur comprend :
- une première partie suivant le premier plan et étant montée sur la tranche de la première extrémité de la première paroi, et
- une deuxième partie suivant le deuxième plan et étant montée sur la tranche de la première extrémité de la deuxième paroi.

Ce mode de réalisation permet de minimiser l'encombrement du dispositif de régulation thermique. De plus, ce mode de réalisation peut comporter en outre un deuxième élément distributeur comprenant :
- une première partie suivant le premier plan et étant montée sur la tranche de la deuxième extrémité de la première paroi, et
- une deuxième partie suivant le deuxième plan et étant montée sur la tranche de la deuxième extrémité de la deuxième paroi.

Selon un aspect de l'invention, les première et deuxième parois comportent respectivement au moins deux canaux. Ainsi, la capacité d'échange thermique de chaque paroi est augmentée. Le nombre de canaux de la première paroi peut être différent du nombre de canaux de la deuxième paroi.

Selon un aspect de l'invention, la première partie du premier élément distributeur comprend une entrée de fluide caloporteur et est agencée pour alimenter les canaux de la première paroi. Dans ce mode de réalisation, la première partie du premier élément distributeur s'étend sur une zone de la tranche de la première extrémité de la première paroi incluant l'ouverture de la totalité des canaux formés en la première paroi. Ainsi la première partie fait office de distributeur. Selon un aspect de l'invention, la deuxième partie du premier élément distributeur est agencée pour collecter le fluide caloporteur provenant des canaux de la deuxième paroi et comprend une sortie de fluide caloporteur. Dans ce mode de réalisation, la deuxième partie du premier élément distributeur s'étend sur une zone de la tranche de la première extrémité de la deuxième paroi incluant l'ouverture de la totalité des canaux formés en la deuxième paroi. Ainsi la deuxième partie fait office de collecteur.

Idéalement, afin de limiter l'encombrement des premier et deuxième éléments de distributions, l'épaisseur de leur première partie est sensiblement identique ou inférieure à l'épaisseur de la première paroi et l'épaisseur de leur deuxième partie est sensiblement identique ou inférieure à l'épaisseur de la deuxième paroi.

Selon un aspect de l'invention, les première et deuxième parties du deuxième élément distributeur sont connectées fluidiquement. Ainsi, le deuxième élément distributeur a un rôle de boite de retournement.

Selon un aspect de l'invention, les première et deuxième parties des premier et/ou deuxième éléments distributeurs présentent une forme longiligne et peuvent être perpendiculaires entre elles dans le cas ou les parois sont elles mêmes perpendiculaires entre elles.

Selon un aspect de l'invention, le premier élément distributeur et/ou le deuxième élément distributeur sont réalisés en métal, notamment en aluminium, ou en polymère.

Selon un aspect de l'invention, le premier élément distributeur et/ou le deuxième élément distributeur sont formés d'une seule pièce.

Selon un aspect de l'invention, les première et deuxième parties des premier et/ou deuxième éléments distributeurs présentent une section ouverte étant destinée à former un conduit de circulation du fluide caloporteur avec la tranche de l'extrémité de la paroi sur laquelle elles sont montées. On entend par cela que l'élément de distribution est une demi-coquille avantageusement longitudinale présentant une rainure ou une déformation qui, une fois assemblée contre la tranche forme un conduit étanche communiquant ainsi avec au moins l'ouverture d'un canal débouchant sur la tranche de la paroi sur laquelle elle est montée. Ainsi, la demi-coquille et la tranche une fois assemblées entre elles délimitent entre elles un conduit.

Selon un aspect de l'invention, le premier élément distributeur comprend une cloison scindant ledit élément en au moins un premier compartiment formé dans la première partie et un deuxième compartiment formé dans la deuxième partie.

Selon un aspect de l'invention, les parois sont formées d'une seule pièce, notamment obtenue par extrusion.

L'invention a également pour objet un boitier de régulation thermique comportant une pluralité de dispositifs de régulation thermique tel que décrit précédemment et une pluralité de composants électriques susceptibles de dégager une chaleur lors de leurs fonctionnement, ces composant étant notamment des éléments de stockage d'énergie électrique, notamment de type batterie électrique, le dispositif étant agencé pour être monté sur un véhicule automobile. L'agencement de la pluralité de dispositifs de régulation thermique permet le refroidissement de chaque composant électrique par plusieurs faces, avantageusement 3 faces.

Dans un boitier de régulation thermique selon l'invention, les dispositifs de régulation thermique sont disposés côte à côte. Particulièrement une extrémité transversale d'une deuxième paroi d'un premier dispositif sera en contact avec une extrémité transversale d'une deuxième paroi d'un autre dispositif. Ainsi, les deuxièmes parois de chacun des dispositifs forment la plaque de font du boitier, et les premières parois de chacun des dispositifs forment des cloisons latérales séparant chaque module de stockage électrique. Avantageusement, chaque module de stockage électrique est refroidi par une plaque de fond, et deux cloisons latérales permettant ainsi une optimisation de la surface d'échange. Au moins un dispositif de régulation thermique situé à une extrémité du boitier, dont l'une des extrémités transversales n'est pas en contact avec un autre dispositif de régulation thermique pourra être lié à une plaque d'échange thermique simple positionnée parallèlement à la première paroi dudit dispositif de régulation thermique de façon à assurer que chaque module de stockage d'énergie électrique soit refroidie de la même façon, par trois faces. La plaque d'échange thermique simple correspond à une paroi comprenant au moins un premier canal apte à être traversé par un fluide caloporteur, une entrée et une sortie de fluide caloporteur.

Selon un aspect de l'invention, les parois d'échange thermique du dispositif de régulation thermique sont agencées pour participer au maintien mécanique des cellules du module.

Selon un aspect de l'invention, la ou les parois comportent chacune une surface plane venant au contact du composant électrique.

Le fluide caloporteur utilisé est préférentiellement de l'eau glycolée, sans limitation du titre de glycol (0% à 100%). Alternativement le fluide caloporteur peut être de l'eau ou choisi parmi les fluides d'appellation R134a, R1234yf ou R744.

Les composants électriques sont en contact thermique avec les dispositifs de régulations thermique. Ce qui signifie que dans certains modes de réalisation les composants électriques sont directement en contact avec les dispositifs de régulations thermique ou indirectement par l'utilisation d'un intermédiaire présentant une bonne conduction thermique.

L'invention sera mieux comprise et d'autres détails, caractéristiques et avantages de l'invention apparaîtront à la lecture de la description suivante faite à titre d'exemples non limitatifs en référence au dessin annexé dans lequel :
- la figure 1a illustre, schématiquement, un mode particulier de réalisation de l'invention,
- la figure 1b illustre, schématiquement, le premier élément de distribution fluidique d'un dispositif de régulation thermique selon la figure 1a,
- la figure 2a illustre, schématiquement et partiellement, un dispositif de régulation thermique selon un autre mode de réalisation au sens de l'invention,
- la figure 2b illustre, schématiquement et partiellement, le premier élément de distribution fluidique selon le mode de réalisation de la figure 2a avant assemblage.
- la figure 3 illustre, schématiquement et partiellement, un boitier de régulation thermique présentant des dispositifs de régulation thermique selon la figure 2a.

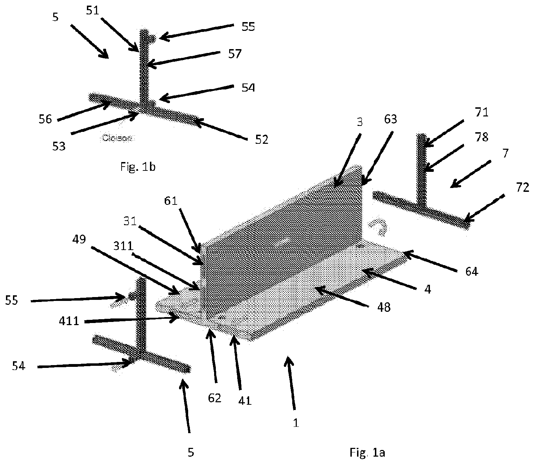

On a décrit sur la figure 1a un dispositif de régulation thermique 1 pour au moins un composant électrique (non représenté ici) susceptible de dégager une chaleur lors de son fonctionnement, ce composant étant notamment un élément de stockage d'énergie électrique ou un dispositif d'électronique de puissance, le dispositif étant notamment agencé pour être monté sur un véhicule automobile, le dispositif comportant :
- une première paroi 3 suivant un premier plan et comprenant un premier canal 31, une première extrémité dudit canal 31 débouchant respectivement sur une tranche 61 d'une première extrémité de la première paroi 3,
- une deuxième paroi 4 suivant un deuxième plan et comprenant un deuxième canal 41, une première extrémité dudit canal 41 débouchant respectivement sur une tranche 62 d'une première extrémité de la deuxième paroi 4,
- au moins un premier élément distributeur fluidique 5 agencé pour être mis en communication fluidique avec au moins l'un des canaux 31, 41
les premier 31 et deuxième 41 canaux étant agencé pour être traversé par un fluide caloporteur, les premier et deuxième plans étant sécants et l'élément distributeur 5 étant distinct des première 3 et deuxième 4 parois et étant monté sur au moins la tranche 61, 62 de la première extrémité, appelée aussi extrémité longitudinale, des premières 3 et deuxième 4 parois.

Le premier élément distributeur 5 comprend une entrée 55 de fluide caloporteur destinée à alimenter le dispositif en fluide, ainsi qu'une sortie 54 destinée à évacuer le fluide du dispositif.

Dans ce mode de réalisation, la première paroi 3 comprend un premier canal 31 et un deuxième canal 311 et la deuxième paroi 4 comprend un premier canal 41 et un deuxième canal 411. Le dispositif 1 comprend également un deuxième élément distributeur 7, distinct des première 3 et deuxième 4 parois, monté sur une tranche 63, 64 d'une extrémité longitudinale opposée à la première tranche 61, 62 des première 3 et deuxième 4 parois. Ainsi, le deuxième élément distributeur 7 a un rôle de boite de retournement et assure la connexion fluidique entre les canaux 31, 311 de la première paroi 3 et les canaux 41, 411 de la deuxième paroi.

Le deuxième élément distributeur 7 comprend :
- une première partie 71 présentant une rainure qui, une fois l'élément distributeur monté sur la tranche 63 de la première paroi 3, forme un conduit apte à faire circuler le fluide caloporteur,
- une deuxième partie 72 présentant une rainure qui, une fois l'élément distributeur monté sur la tranche 64 de la deuxième paroi 4, forme un conduit apte à faire circuler le fluide caloporteur.

Les première et deuxième parties sont connectées fluidiquement.

Les premier et deuxième éléments distributeurs peuvent être formés d'une seule pièce ou de plusieurs pièces assemblées.

Les première 3 et deuxième 4 parois sont reliées entre elles par une extrémité transversale de l'une des parois. Dans ce mode de réalisation, la première paroi est reliée, par l'une de ses extrémités transversales, à l'une des faces externes de la deuxième paroi. Ainsi, la première paroi forme une cloison latérale du dispositif, la deuxième paroi forme une plaque de fond séparée par la première paroi. La plaque de fond est alors séparée en deux portions identiques 48, 49 de plaque de fond. Ainsi selon se mode de réalisation, un dispositif de régulation thermique peut réguler au moins deux composants électriques, positionnés de part et d'autre de la première paroi, qui seront alors chacun refroidi par au moins deux faces.

Dans ce mode de réalisation, la jonction entre les premières et deuxième parois formant ainsi un « T » inversé, les éléments distributeurs présentent donc la même forme.

La figure 1b illustre, schématiquement, le premier élément 5 de distribution fluidique d'un dispositif de régulation thermique 1 selon la figure 1a.

L'entrée 55 de fluide caloporteur est portée par la première partie 51 destinée à être montée sur la tranche 61 de la première parois 3.

La sortie 54 de fluide caloporteur est portée par la deuxième partie 52 destinée à être montée sur la tranche 62 de la deuxième parois.

Les première et deuxième parties sont séparées par une cloison 53 formant ainsi deux compartiments distincts, un premier compartiment 57 formé dans la première partie et un deuxième compartiment 56 formé dans la deuxième partie.

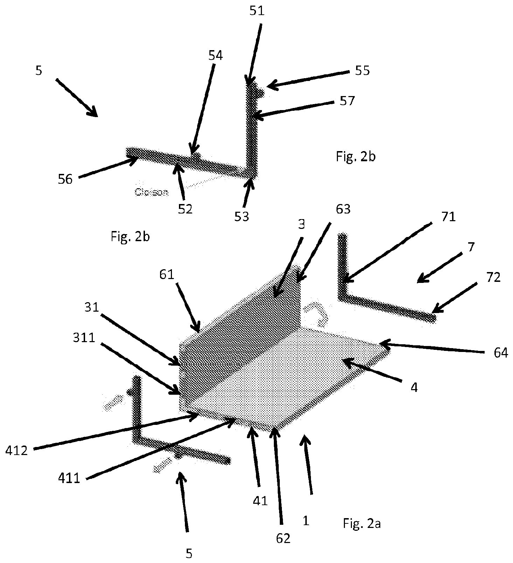

La figure 2a illustre, schématiquement et partiellement, un dispositif de régulation thermique selon un mode de réalisation dérivé du mode de réalisation présenté en figure 1a. Seules les différences seront présentées ici, aussi, des références identiques correspondent à des éléments identiques.

Dans ce mode de réalisation, le dispositif de régulation thermique 1 présente une forme générale en « L ». Les éléments distributeurs présentent donc la même forme. Les première 3 et deuxième 4 parois sont reliées entre elles par l'une des extrémités transversales de chacune des parois. Ainsi, la première paroi forme une cloison latérale et la deuxième paroi forme une plaque de fond. Selon se mode de réalisation, un dispositif de régulation thermique 1 peut réguler au moins un composant électrique qui sera alors refroidi par au moins deux faces. Dans ce mode de réalisation, les parois sont orthogonales.

En outre, la deuxième paroi 4 comprend trois canaux 41, 411, 412. Les premier 5 et deuxième 7 éléments distributeurs sont dimensionnés de façon à ce que chacune de leur deuxième partie 52, 72 soit en connexion fluidique avec la totalité des canaux 41, 411, 412 de la deuxième paroi 4.

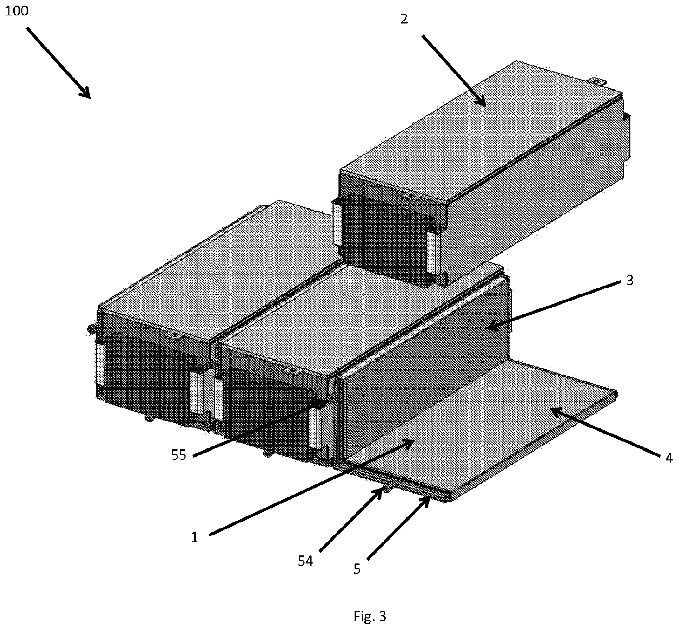

La figure 3 illustre, schématiquement et partiellement, un boitier de régulation thermique au sens de l'invention.

Le boitier de régulation thermique 100 pour composants électriques 2, notamment pour modules de stockage d'énergie électrique comporte une pluralité de dispositifs de régulation thermique 1 agencés pour loger lesdits composants électriques 2. Chacun de ces composants électriques 2 étant en contact thermique respectivement, par au moins deux faces, avantageusement trois faces, avec les dispositifs de régulation thermique 1. Les premières parois 3 de chacun des dispositifs de régulation thermique 1 forment des cloisons de séparation latérales entre les composants électriques 2.

Les dispositifs de régulation thermique 1 sont disposés côte à côte et une extrémité transversale d'un premier dispositif sera en contact avec une extrémité transversale d'un autre dispositif. Ainsi, les deuxièmes parois 4 de chacun des dispositifs forment la plaque de font du boitier 100, et les premières parois 3 de chacun des dispositifs forment des cloisons séparant chaque composant électrique 2. Les composants électriques sont ainsi chacun refroidi par une plaque de fond, et deux cloisons latérales. Au moins un dispositif de régulation thermique situé à une extrémité du boitier, dont l'une des extrémités transversales n'est pas en contact avec un autre dispositif de régulation thermique pourra être lié à une plaque d'échange thermique simple (non représenté ici) positionnée parallèlement à la première paroi dudit dispositif de régulation thermique de façon à assurer que chaque module de stockage d'énergie électrique soit refroidi de la même façon, par trois faces.

Dans un mode de réalisation non représenté ici, l'invention fonctionne également avec un seul élément distributeur.

Les modes de réalisation décrits précédemment s'adaptes particulièrement à des modules de stockage d'énergie électrique de forme parallélépipédique. Cependant il peut également être envisagé l'invention avec des cellules de batteries de différentes formes cylindriques.

## Revendications

1. Dispositif de régulation thermique (1) pour au moins un composant électrique (2) susceptible de dégager une chaleur lors de son fonctionnement, ce composant étant notamment un élément de stockage d'énergie électrique ou un dispositif d'électronique de puissance, le dispositif étant notamment agencé pour être monté sur un véhicule automobile, le dispositif comportant :
- une première paroi (3) suivant un premier plan et comprenant un premier canal (31), les extrémités dudit canal (31) débouchant respectivement sur une tranche (61) d'une première extrémité et sur une tranche (63) d'une deuxième extrémité de la première paroi (3),
- une deuxième paroi (4) suivant un deuxième plan et comprenant un deuxième canal (41), les extrémités dudit canal (41) débouchant respectivement sur une tranche (62) d'une première extrémité et sur une tranche (64) d'une deuxième extrémité de la deuxième paroi (4),
- au moins un premier élément distributeur fluidique (5) agencé pour être mis en communication fluidique avec au moins l'un des canaux (31,41)
les premier (31) et deuxième (41) canaux étant agencés pour être traversés par un fluide caloporteur, les premier et deuxième plans étant sécants et l'élément distributeur (5) étant distinct des première (3) et deuxième (4) parois et étant monté sur au moins la tranche (61, 62) de la première extrémité des premières (3) et deuxième (4) parois.

2. Dispositif de régulation thermique (1) selon la revendication précédente, comprenant un deuxième élément distributeur (7), distinct des première (3) et deuxième (4) parois, monté sur la tranche (63, 64) de la deuxième extrémité des première (3) et deuxième (4) parois.

3. Dispositif de régulation thermique (1) selon la revendication précédente, dans lequel les premier (5) et deuxième (7) élément distributeur comprennent chacun :
- une première partie (51, 71) suivant le premier plan et étant montée sur la tranche (61, 63) d'une extrémité de la première paroi (3), et
- une deuxième partie (52, 72) suivant le deuxième plan et étant montée sur la tranche (62, 64) d'une extrémité de la deuxième paroi (4).

4. Dispositif de régulation thermique (1) selon la revendication précédente, dans lequel les première (3) et deuxième (4) parois comportent respectivement au moins deux canaux (31, 311, 41, 411).

5. Dispositif de régulation thermique (1) selon l'une des revendications 3 et 4, dans lequel la première partie (51) du premier élément distributeur (5) comprend une entrée (55) de fluide caloporteur et est agencée pour alimenter le canal ou les canaux (31,311) de la première paroi.

6. Dispositif de régulation thermique (1) selon la revendication précédente, dans lequel la deuxième partie (52) du premier élément distributeur (5) est agencée pour collecter le fluide caloporteur provenant des canaux (41, 411) de la deuxième paroi et comprend une sortie (54) de fluide caloporteur.

7. Dispositif de régulation thermique (1) selon l'une quelconque des revendications 3 à 6, dans lequel les première (71) et deuxième (72) parties du deuxième élément distributeur (7) sont connecté fluidiquement.

8. Dispositif de régulation thermique (1) selon l'une des revendications précédentes, dans lequel le premier et/ou le deuxième éléments de distributions (5) présentent une section ouverte étant destinée à former un conduit de circulation du fluide caloporteur avec la tranche (61, 62, 63, 64) de la paroi (3,4) sur laquelle il sont montés.

9. Dispositif de régulation thermique (1) selon la revendication précédente, dans lequel le premier élément distributeur (5) comprend une cloison (53) scindant ledit élément (5) en au moins un premier compartiment (57) formé dans la première partie (51) et un deuxième compartiment (56) formé dans la deuxième partie (52).

10. Boitier de régulation thermique pour une pluralité de composants électriques susceptibles de dégager une chaleur lors de leurs fonctionnement, ces composant étant notamment des éléments de stockage d'énergie électrique, notamment de type batterie électrique, le boitier étant agencé pour être monté sur un véhicule automobile, ledit boitier comportant une pluralité de dispositifs de régulation thermique tel que revendiqué dans l'une des revendications précédentes, au moins un, préférentiellement plusieurs composants électriques, lesdits dispositif étant agencés de façon à permettre le refroidissement de chaque composant électrique par plusieurs faces, avantageusement 3 faces.

## Patentansprüche

1. Wärmeregulierungsvorrichtung (1) für wenigstens ein elektrisches Bauelement (2), das bei seinem Betrieb eine Wärme abgeben kann, wobei dieses Bauelement insbesondere ein Element zur Speicherung elektrischer Energie oder eine Leistungselektronikvorrichtung ist, wobei die Vorrichtung insbesondere dafür angeordnet ist, an einem Kraftfahrzeug angebracht zu sein, die Vorrichtung aufweisend:
- eine erste Wand (3), die in einer ersten Ebene verläuft und einen ersten Kanal (31) umfasst, wobei die Enden des Kanals (31) an einem Rand (61) eines ersten Endes bzw. an einem Rand (63) eines zweiten Endes der ersten Wand (3) münden,
- eine zweite Wand (4), die in einer zweiten Ebene verläuft und einen zweiten Kanal (41) umfasst, wobei die Enden des Kanals (41) an einem Rand (62) eines ersten Endes bzw. an einem Rand (64) eines zweiten Endes der zweiten Wand (4) münden,
- wenigstens ein erstes Fluidverteilungselement (5), das dafür angeordnet ist, mit wenigstens einem der Kanäle (31, 41) in Fluidverbindung gebracht zu sein
wobei der erste (31) und zweite (41) Kanal dafür angeordnet sind, von einem Wärmeübertragungsfluid durchströmt zu werden, wobei sich die erste und zweite Ebene schneiden und das Verteilungselement (5) von der ersten (3) und zweiten (4) Wand gesondert ist und wenigstens am Rand (61, 62) des ersten Endes der ersten (3) und zweiten (4) Wand angebracht ist.

2. Wärmeregulierungsvorrichtung (1) nach dem vorhergehenden Anspruch, umfassend ein zweites Verteilungselement (7), das von der ersten (3) und zweiten (4) Wand gesondert ist, das am Rand (63, 64) des zweiten Endes der ersten (3) und zweiten (4) Wand angebracht ist.

3. Wärmeregulierungsvorrichtung (1) nach dem vorhergehenden Anspruch, wobei das erste (5) und zweite (7) Verteilungselement jeweils Folgendes umfassen:
- einen ersten Abschnitt (51, 71), der in der ersten Ebene verläuft und am Rand (61, 63) eines Endes der ersten Wand (3) angebracht ist, und
- einen zweiten Abschnitt (52, 72), der in der zweiten Ebene verläuft und am Rand (62, 64) eines Endes der zweiten Wand (4) angebracht ist.

4. Wärmeregulierungsvorrichtung (1) nach dem vorhergehenden Anspruch, wobei die erste (3) und zweite (4) Wand jeweils wenigstens zwei Kanäle (31, 311, 41, 411) aufweisen.

5. Wärmeregulierungsvorrichtung (1) nach einem der Ansprüche 3 und 4, wobei der erste Abschnitt (51) des ersten Verteilungselements (5) einen Einlass (55) für Wärmeübertragungsfluid umfasst und dafür angeordnet ist, den Kanal oder die Kanäle (31, 311) der ersten Wand zu speisen.

6. Wärmeregulierungsvorrichtung (1) nach dem vorhergehenden Anspruch, wobei der zweite Abschnitt (52) des ersten Verteilungselements (5) dafür angeordnet ist, das von den Kanälen (41, 411) der zweiten Wand kommende Wärmeübertragungsfluid zu sammeln und einen Auslass (54) für Wärmeübertragungsfluid umfasst.

7. Wärmeregulierungsvorrichtung (1) nach einem der Ansprüche 3 bis 6, wobei der erste (71) und zweite (72) Abschnitt des zweiten Verteilungselements (7) fluidisch verbunden sind.

8. Wärmeregulierungsvorrichtung (1) nach einem der vorhergehenden Ansprüche, wobei das erste und/oder zweite Verteilungselement (5) einen offenen Querschnitt aufweisen, der dazu bestimmt ist, eine Strömungsleitung für das Wärmeübertragungsfluid mit dem Rand (61, 62, 63, 64) der Wand (3, 4) zu bilden, an der sie angebracht sind.

9. Wärmeregulierungsvorrichtung (1) nach dem vorhergehenden Anspruch, wobei das erste Verteilungselement (5) eine Trennwand (53) umfasst, die das Element (5) in wenigstens eine erste Kammer (57), die im ersten Abschnitt (51) ausgebildet ist, und eine zweite Kammer (56), die im zweiten Abschnitt (52) ausgebildet ist, unterteilt.

10. Wärmeregulierungsgehäuse für eine Mehrzahl von elektrischen Bauelementen, die bei ihrem Betrieb Wärme abgeben können, wobei diese Bauelemente insbesondere Elemente zur Speicherung elektrischer Energie sind, insbesondere vom Typ einer elektrischen Batterie, wobei das Gehäuse dafür angeordnet ist, an einem Kraftfahrzeug angebracht zu sein, wobei das Gehäuse eine Mehrzahl von Wärmeregulierungsvorrichtungen nach einem der vorhergehenden Ansprüche, wenigstens eine, vorzugsweise mehrere elektrische Bauelemente aufweist, wobei die Vorrichtungen so angeordnet sind, dass sie die Kühlung jedes elektrischen Bauelements über mehrere Seiten, vorteilhafterweise 3 Seiten, ermöglicht.

## Claims

1. Thermal regulation device (1) for at least one electrical component (2) capable of discharging heat during the operation thereof, this component particularly being an electrical energy storage element or an electronic power device, the device particularly being arranged to be mounted on a motor vehicle, the device comprising:
- a first wall (3) following a first plane and comprising a first channel (31), the ends of said channel (31) respectively opening into a portion (61) of a first end and into a portion (63) of a second end of the first wall (3),
- a second wall (4) following a second plane and comprising a second channel (41), the ends of said channel (41) respectively opening into a portion (62) of a first end and into a portion (64) of a second end of the second wall (4),
- at least one first fluid distribution element (5) arranged to be placed in fluid communication with at least one of the channels (31, 41),
the first (31) and second (41) channels being arranged to be passed through by a heat-transfer fluid, the first and second planes intersecting and the distribution element (5) being separate from the first (3) and second (4) walls and being mounted on at least the portion (61, 62) of the first end of the first (3) and second (4) walls.

2. Thermal regulation device (1) according to the preceding claim, comprising a second distribution element (7), separate from the first (3) and second (4) walls, mounted on the portion (63, 64) of the second end of the first (3) and second (4) walls.

3. Thermal regulation device (1) according to the preceding claim, wherein the first (5) and second (7) distribution elements each comprise:
- a first part (51, 71) following the first plane and being mounted on the portion (61, 63) of one end of the first wall (3), and
- a second part (52, 72) following the second plane and being mounted on the portion (62, 64) of one end of the second wall (4).

4. Thermal regulation device (1) according to the preceding claim, wherein the first (3) and second (4) walls respectively comprise at least two channels (31, 311, 41, 411).

5. Thermal regulation device (1) according to one of Claims 3 and 4, wherein the first part (51) of the first distribution element (5) comprises a heat-transfer fluid inlet (55) and is arranged to feed the channel or the channels (31, 311) of the first wall.

6. Thermal regulation device (1) according to the preceding claim, wherein the second part (52) of the first distribution element (5) is arranged to collect the heat-transfer fluid originating from the channels (41, 411) of the second wall and comprises a heat-transfer fluid outlet (54).

7. Thermal regulation device (1) according to any one of Claims 3 to 6, wherein the first (71) and second (72) parts of the second distribution element (7) are fluidly connected.

8. Thermal regulation device (1) according to one of the preceding claims, wherein the first and/or the second distribution elements (5) have an open section intended to form a circulation duct for the heat-transfer fluid with the portion (61, 62, 63, 64) of the wall (3, 4) on which they are mounted.

9. Thermal regulation device (1) according to the preceding claim, wherein the first distribution element (5) comprises a partition (53) splitting said element (5) into at least one first compartment (57) formed in the first part (51) and one second compartment (56) formed in the second part (52).

10. Thermal regulation housing for a plurality of electrical components capable of discharging heat during the operation thereof, these components particularly being electrical energy storage elements, particularly of the electric battery type, the housing being arranged to be mounted on a motor vehicle, said housing comprising a plurality of thermal regulation devices as claimed in one of the preceding claims, at least one, preferably a plurality of electrical components, said devices being arranged so as to allow each electrical component to be cooled via a plurality of faces, advantageously 3 faces.
